# EUROPÄISCHE PATENTANMELDUNG

(11) **EP 4 641 063 A1**
(43) Veröffentlichungstag der Anmeldung: **29.10.2025**
(21) Anmeldenummer: 25167355.4
(22) Anmeldetag: 31.03.2025
(51) Int. Cl.: F16L 47/34, F16L 41/06

(54) **VERFAHREN ZUM ANSCHLIESSEN EINER ANBOHRARMATUR UND ANBOHRARMATUR**

(30) Priorität: 23.04.2024 DE 102024111399
(71) Anmelder: Wilhelm Ewe GmbH & Co. KG, 38104 Braunschweig (DE)
(72) Erfinder: Marhenke, Lukas, 38114 Braunschweig (DE)
(74) Vertreter: Gramm, Lins & Partner Patent- und Rechtsanwälte PartGmbB

(57) **Zusammenfassung**

Die Erfindung betrifft ein Verfahren zum Anschließen einer Anbohrarmatur an eine Rohrleitung (4), wobei die Anbohrarmatur eine verschieblich gelagerte Stanzhülse (6) und einen verschieblich gelagerten Dorn (10) aufweist, wobei das Verfahren folgende Schritte aufweist:
a. Positionieren der Anbohrarmatur an der Rohrleitung (4),
b. Verschieben des Dorns (10) in Richtung der Rohrleitung (4) bis der Dorn (10) die Rohrleitung (4) durchstößt,
c. Verschieben der Stanzhülse (6) in Richtung der Rohrleitung (4) bis die Stanzhülse (6) die Rohrleitung (4) durchstößt, so dass ein Stopfen (24) aus der Rohrleitung (4) herausgestanzt wird, wobei der Dorn (10) durch den Stopfen (24) verläuft,
d. Verschieben des Dorns (10) von der Rohrleitung (4) weg, so dass der Stopfen (24) mit dem Dorn (10) bewegt wird.

## Beschreibung

Die Erfindung betrifft ein Verfahren zum Anschließen einer Anbohrarmatur an eine Rohrleitung. Die Erfindung betrifft zudem eine für ein solches Verfahren verwendbare Anbohrarmatur.

Anbohrarmaturen sind aus dem Stand der Technik seit langem bekannt und werden verwendet, wenn an eine bereits verlegte Rohrleitung eine Abzweigung angesetzt werden soll, etwa weil ein neuer Anschluss benötigt wird. Die Rohrleitung wird dabei zumeist von einem Fluid durchströmt, beispielsweise einer Flüssigkeit wie Wasser oder einem Gas. Anbohrarmaturen werden verwendet, um die Rohrleitung so anzugeben, dass eine neue Abzweigung oder ein neuer Anschluss hergestellt werden kann, ohne dass die Rohrleitung dafür stillgelegt werden muss. Damit wird die Versorgung von stromabwärts gelegenen Abnehmern des Fluid nicht unterbrochen und die Abzweigung oder der Anschluss kann schnell, einfach und insbesondere kostengünstig gelegt werden.

Dazu ist es notwendig, die Rohrleitung, die insbesondere eine Kunststoff-Rohrleitung ist, anzubohren. Die DE 10 2005 008 398 A1 beschreibt eine solche Anbohrarmatur, die einen Bohreinsatz aufweist. Soll die Rohrleitung angebohrt werden, wird zunächst die Anbohrarmatur fest an der Rohrleitung positioniert, wofür beispielsweise eine Rohr-Schelle verwendet wird. Der Bohreinsatz wird dann auf die Außenseite der Rohrleitung aufgesetzt und in Rotation versetzt. Er weist einen hohlen Schneidkopf auf, der sich entlang einer Kreisbahn durch die Wand der Rohrleitung bewegt, bis er die Rohrleitung durchstößt. Unter dem "Durchstoßen" der Rohrleitung wird vorliegend verstanden, dass die Wand der Rohrleitung durchstoßen wird und eine Verbindung zwischen dem Innenraum der Rohrleitung und dem Außenraum außerhalb der Rohrleitung hergestellt wird. Nachteilig ist bei der Verwendung eines solchen Bohreinsatzes, dass es beim Bohren zur Bildung von Spänen kommen kann, die mit dem in der Rohrleitung strömenden Fluid bewegt werden und so zu einem Abnehmer des Fluid geleitet werden könnten, wo sie zu Verstopfungen oder Verunreinigungen oder sogar zu Beschädigungen von Geräten führen können.

Um dieses Problem zu lösen, schlägt die DE 10 2006 029 297 A1 vor, einen Bohreinsatz mit einer Kammer zu versehen, die aus der angebohrten Leitung heraus bewegt wird, und so den aus der Wand der Rohrleitung herausgebohrten Stopfen und gegebenenfalls entstandene Späne aus dem in der Rohrleitung strömenden Fluid zu entfernen. Nachteilig ist jedoch, dass auch in dieser Ausgestaltung der Bohreinsatz in der angebohrten Rohrleitung verbleibt und so den Strömungswiderstand zur Anschlussleitung erhöht. Zudem muss nach dem Anbohren die Verbindung zwischen dem Antriebselement des Bohreinsatzes und dem im Bohrloch verbleibenden Schneidelement gelöst werden. Anderenfalls würde das Schneidelement beim Ausziehen des Antriebselement aus dem Fluidstrom mit ausgeschraubt werden. Dies ist technisch nachteilig, zumindest jedoch aufwändig.

Aus der DE 196 29 459 A1 ist eine Anbohrarmatur bekannt, die keinen Bohreinsatz, sondern eine Stanzhülse aufweist, die durch das Aufbringen großen Druckes durch die Wand der Rohrleitung gedrückt wird. Dadurch wird das Risiko, dass Späne gebildet werden, deutlich reduziert. Der entstehende Stopfen wird durch den Abgangsstutzen, den jede Anbohrarmatur aufweist und der mit einer Rohrleitung zum neuen Abnehmer verbunden ist, ausgespült. Nachteilig ist, dass die Armatur vor dem Anschließen einer Anschlussleitung gespült werden muss. In der Praxis wird jedoch oftmals erst die Anschlussleitung gelegt und erst dann die Verbindung zur Rohrleitung gebohrt, so dass ein Spülen schwierig ist. Zudem wird für diese Ausgestaltung ein Mindestleitungsdruck in der angebohrten Rohrleitung benötigt, um die Reibung zwischen der Stanzhülse und dem Stopfen zu überwinden..

Der Erfindung liegt daher die Aufgabe zugrunde, ein Verfahren zum Anschließen einer Anbohrarmatur an eine Rohrleitung sowie eine dafür verwendbare Anbohrarmatur vorzuschlagen, mit denen die Nachteile aus dem Stand der Technik vermieden, zumindest jedoch gemildert werden.

Die Erfindung löst die gestellte Aufgabe durch ein Verfahren zum Anschließen einer Anbohrarmatur an eine Rohrleitung, wobei die Anbohrarmatur eine verschieblich gelagerte Stanzhülse und einen verschieblich gelagerten Dorn aufweist, wobei das Verfahren folgend Schritte aufweist:
a. Positionieren der Anbohrarmatur an der Rohrleitung,
b. Verschieben des Dorns in Richtung der Rohrleitung bis der Dorn die Rohrleitung durchstößt,
c. Verschieben der Stanzhülse in Richtung der Rohrleitung bis die Stanzhülse die Rohrleitung durchstößt, sodass ein Stopfen aus der Rohrleitung heraus gestanzt wird, wobei der Dorn durch den Stopfen verläuft,
d. Verschieben des Dorns von der Rohrleitung weg, sodass der Stopfen mit dem Dorn bewegt wird.

Nachdem die Anbohrarmatur an der Rohrleitung positioniert und vorzugsweise final befestigt wurde, wird zunächst der Dorn in Richtung auf die Rohrleitung verschoben, bis er diese durchstößt. Dies ist dann der Fall, wenn sich die Spitze des Dorns im Innenraum der Rohrleitung befindet. Mit anderen Worten durchstößt der Dorn die Wand der Rohrleitung. Erst danach wird auch die Stanzhülse soweit in Richtung der Rohrleitung verschoben, bis die Stanzhülse die Rohrleitung durchstößt. Die Stanzhülse ist hohl und weist eine Stanzkante auf, mit der sie die Rohrleitung durchstößt. Dabei wird ein Stück aus der Wand der Rohrleitung heraus gestanzt. Dieses Stück wird im folgenden Stopfen genannt. Durch diesen Stopfen verläuft der Dorn. Der Dorn hat die Wand der Rohrleitung folglich an einer Stelle durchstoßen, die zu dem Stopfen gehört. In einer bevorzugten Ausgestaltung verläuft der Dorn innerhalb der Stanzhülse und lässt sich relativ zu ihr bewegen.

Es ist nicht notwendig, dass die Stanzhülse nicht bewegt wird, bis der Dorn die Rohrleitung durchstoßen hat. Wichtig ist lediglich, dass die Stanzhülse den Stopfen erst dann aus der Wand der Rohrleitung herausstanzt, wenn der Dorn die Wand der Rohrleitung und damit die Rohrleitung selbst bereits durchstoßen hat. Hätte der Stopfen keine Verbindung mehr zur Rohrwandung, weil er durch die Stanzhülse bereits von dieser getrennt ist, könnte er mangels ausreichender Gegenkraft nicht mehr von dem Dorn durchstoßen werden, sondern würde von dem Dorn in die Rohrleitung gestoßen. Da der Dorn erst die Rohrleitung und damit den späteren Stopfen durchstößt, bevor die Stanzhülse den Stopfen aus der Wand der Rohrleitung herausstanzt, wird gewährleistet, dass der Stopfen nicht von dem vorzugsweise durch die rohrleitungsströmenden Fluid mitgerissen wird. Vielmehr verbleibt er sicher an dem Dorn.

Vorzugsweise wird der Dorn beim anschließenden Verschieben des Dorns von der Rohrleitung weg soweit von der Rohrleitung wegbewegt, bis der Stopfen keinen Kontakt mehr zu der Stanzhülse hat. Beim Verschieben des Dorns von der Rohrleitung weg verbleibt die Stanzhülse vorzugsweise in der Rohrleitung und der Dorn wird auch relativ zur Stanzhülse bewegt. Bevorzugt wird der Dorn soweit von der Rohrleitung und damit auch von der Stanzhülse weg bewegt, bis er sich außerhalb der Stanzhülse befindet. Damit kann durch die Stanzhülse Fluid aus der angebohrten Rohrleitung in eine Abzweigleitung, die beispielsweise an einem Abgangsstutzen der Anbohrarmatur angeordnet wird, strömen.

In einer bevorzugten Ausgestaltung weist die Stanzhülse an ihrer Innenfläche einen Vorsprung auf, der vorzugsweise ein umlaufender Vorsprung ist. Das Verfahren weist vorzugsweise folgende zusätzlichen Schritte auf:
e. Verschieben des Dorns und des Stopfens in Richtung der Rohrleitung, sodass der Stopfen an dem Vorsprung anliegt und der Dorn durch den Stopfen hindurchgeschoben wird,
f. Verschieben des Dorns und des Stopfens von der Rohrleitung weg.

Im Verfahrensschritt d. wird der Dorn mit dem Stopfen, durch den er sich erstreckt, von der Rohrleitung wegbewegt. Dies geschieht vorzugsweise soweit, dass der Stopfen den Vorsprung an der Innenfläche der Stanzhülse passiert. Der Vorsprung ist so ausgebildet, dass ein Innendurchmesser der Stanzhülse auf der der Stanzkante und damit der Rohrleitung zugewandten Seite des Vorsprung kleiner ist als ein Innendurchmesser der Stanzhülse auf der der Stanzkante und damit der Rohrleitung abgewandten Seite des Vorsprung. Im Stanzprozess entstehen Spannungen im Material, die zu einem Aufweiten des Stopfens führen, sobald der Stopfen entlang der Schnittkante nicht mehr gekammert ist.,Wird nun im Verfahrensschritt d. der Dorn und der Stopfen so weit bewegt, dass der Stopfen diesen Vorsprung passiert, kommt es zum Entspannen des Materials des Stopfens und zum Weiten des Materials entlang des Umfanges, sodass der Stopfen beim Verschieben des Dorns im Verfahrensschritt e. an dem Vorsprung anliegt. Ist die umfängliche Aufweitung nicht ausreichend, wird diese Funktion durch Reibung des Stopfens an der Innenwandung der Schneidhülse erzielt. Vorzugsweise lässt sich der Stopfen nicht an dem Vorsprung vorbei in Richtung auf die Stanzkante der Stanzhülse verschieben. Da der Dorn jedoch über diesen Punkt hinaus weiterbewegt wird, bewegt er sich durch den Stopfen hindurch. Anschließend wird der Dorn mit dem Stopfen wieder von der Rohrleitung wegbewegt. Der Stopfen wird dadurch weiter aus dem Strömungsweg des strömenden Fluid bewegt, sodass der durch den Stopfen hervorgerufene Strömungswiderstand reduziert, vorzugsweise vollständig aufgehoben wird.

Die Erfindung löst die gestellte Aufgabe zudem durch eine Anbohrarmatur für ein hier beschriebenes Verfahren, wobei die Anbohrarmatur eine verschieblich gelagerte Stanzhülse und einen verschieblich gelagerten Dorn aufweist, wobei der Dorn und die Stanzhülse unabhängig voneinander verschieblich sind. Der Dorn und/oder die Stanzhülse können manuell verschieblich sein. Dafür ist vorzugsweise jeweils ein Betätigungselement vorhanden, auf das manuell eine Kraft aufgebracht werden kann. Alternativ oder zusätzlich dazu ist wenigstens ein Antrieb vorhanden, durch den die Stanzhülse und/oder der Dorn bewegt werden können. Besonders bevorzugt sind zwei Antriebe vorhanden, von denen einer eingerichtet ist, die Stanzhülse zu bewegen und der andere eingerichtet ist, den Dorn zu bewegen.

Vorzugsweise sind die Stanzhülse und der Dorn parallel zueinander verschieblich gelagert. Dies bedeutet, dass die Stanzhülse und der Dorn in die gleiche Richtung verschieblich sind, also die Verschieberichtungen parallel verlaufen. Dafür das Verfahren die Stanzhülse und der Dorn auf die Rohrleitung zu und von der Rohrleitung weg bewegt werden müssen, sind sowohl die Stanzhülse als auch der Dorn entlang der jeweiligen Verschieberichtung vor und zurück bewegbar.

Bevorzugt verfügt der Dorn über einen Schaft und einen Kopf mit einer Spitze, wobei der Kopf einen von der Spitze aus zunehmenden Durchmesser aufweist, der an seiner größten Ausdehnung größer als der Durchmesser des Schaftes ist. Der Schaft kann auch als Bolzen, Stange oder Stab bezeichnet werden und weist vorzugsweise einen über seine Ausdehnung konstanten Durchmesser auf. Besonders bevorzugt weist er einen kreisförmigen Querschnitt auf. Der Kopf des Dorns ist so am Schaft des Dorns angeordnet, dass die Spitze des Kopfes vom Schaft weg zeigt und die Stelle bildet, mit der der Dorn den ersten Kontakt zur Rohrleitung herstellt. Die Spitze ist so ausgebildet, dass sie besonders gut in die Wand der Rohrleitung eindringt. Da die Rohrleitung vorzugsweise aus einem Kunststoff hergestellt ist, kommt es beim Eindringen der Spitze des Dorns in die Rohrleitung zu einer elastischen Verformung. Dies bedeutet nicht, dass es ausschließlich zu einer elastischen Verformung kommt, es sind durchaus auch plastische Anteile der Verformung möglich. Durch den elastischen Anteil der Verformung schließt sich die Öffnung in der Wand der Rohrleitung, die durch den Kopf des Dorns hervorgerufen wird, fest um den Schaft des Dorns, sobald die Spitze des Dorns die Wand der Rohrleitung vollständig durchstoßen hat. Dadurch ist sichergestellt, dass der Stopfen der Rohrleitung, der sich nach dem Durchstoßen der Rohrleitung durch die Stanzhülse gebildet hat und durch den der Dorn verläuft, beim Verschieben des Dorns von der Rohrleitung weg nicht vom Dorn getrennt werden kann. Vielmehr wird der Stopfen mit dem Dorn gemeinsam von der Rohrleitung weg verschoben.

In einer bevorzugten Ausgestaltung verfügt der Schaft des Dorns über eine Stufe, wobei der Durchmesser des Schaftes auf der der Spitze des Dorns zugewandten Seite der Stufe größer ist als auf der der Spitze abgewandten Seite des Schaftes. Vorzugsweise verfügt die Stanzhülse über einen rotationssymmetrischen Querschnitt, wobei sich der Dorn entlang der Rotationsachse erstreckt.

Vorteilhafterweise weist die Stanzhülse an ihrer Innenfläche einen Vorsprung auf, der vorzugsweise ein umlaufender Vorsprung ist. Der Vorsprung ist vorzugsweise so ausgebildet, dass ein Innendurchmesser der Stanzhülse auf der der Stanzkante zugewandten Seite der Stanzhülse kleiner ist als auf der der Stanzkante abgewandten Seite der Stanzhülse. Die Stanzkante der Stanzhülse ist das vordere Ende der Stanzhülse, dass mit der Rohrleitung als erstes in Kontakt kommt, wenn die Stanzhülse in Richtung auf die Rohrleitung verschoben wird.

Im Verfahrensschritte e. wird der Dorn mit dem sich daran befindenden Stopfen wieder auf die Rohrleitung zu verschoben, wobei ab einem bestimmten Zeitpunkt der Stopfen an dem Vorsprung an der Innenfläche der Stanzhülse anliegt. Danach wird der Dorn weiter in Richtung auf die Rohrleitung verschoben, sodass der Dorn relativ zum Stopfen bewegt wird, der durch den Vorsprung daran gehindert wird, sich ebenfalls in Richtung auf die Rohrleitung zu bewegen. Der Dorn wird dabei weiter durch den Stopfen bewegt. Anders ausgedrückt wird der Stopfen weiter von der Spitze des Dorns weg entlang des Dorns verschoben. Dies geschieht vorzugsweise soweit, bis sich auch die Stufe entlang des Schaftes des Dorns durch den Stopfen hindurch verschoben hat. Da, wie bereits dargelegt, der Stopfen auch elastisch verformt ist, schließt sich die Öffnung des Stopfens, durch die sich der Dorn erstreckt, eng um den Schaft des Dorns. Dies bedeutet, dass sich auch der Durchmesser der Öffnung im Stopfen verringert, sobald die Stufe des Schaftes des Dorns sich durch den Stopfen hindurch bewegt hat. Dadurch wird es dem Stopfen erschwert oder gar unmöglich gemacht, sich wieder über die Stufe hinweg in Richtung auf die Spitze des Dorns zu bewegen. Dies ist von Vorteil, da im Verfahrensschritte f. der Dorn wieder von der Rohrleitung wegbewegt wird, wobei diese Bewegung auch auf den Stopfen übertragen wird. Dieser wird nun weiter aus dem Strömungsweg des durch die Rohrleitung und auch durch die Anbohrarmatur strömenden Fluids wegbewegt, sodass der Strömungswiderstand, der durch den Stopfen hervorgerufen wird, reduziert oder vollständig entfernt wird.

Mithilfe der beigefügten Zeichnungen, wird nachfolgend ein Ausführungsbeispiel der vorliegenden Erfindung näher erläutert. Es zeigen
- Figuren 1 bis 5 -: eine Anbohrarmatur gemäß der vorliegenden Erfindung in verschiedenen Stadien des Verfahrens und
- Figur 6 -: die Darstellung einer Stanzhülse.

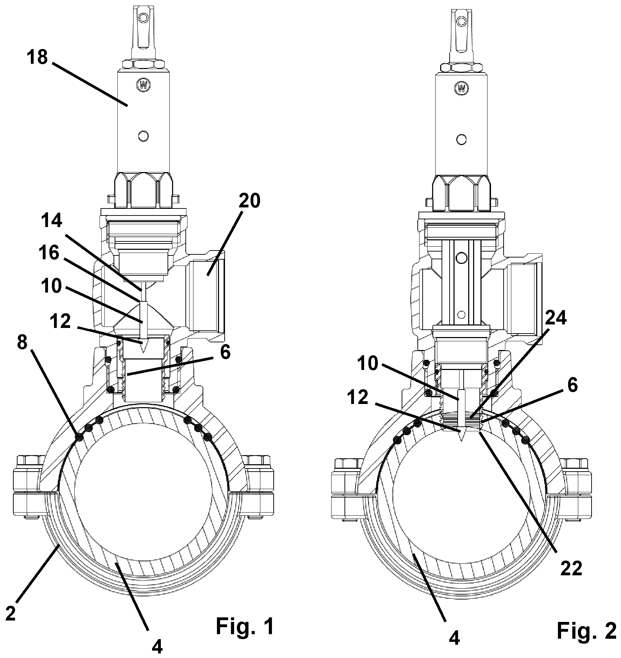

Figur 1 zeigt eine Anbohrarmatur gemäß einem Ausführungsbeispiel der vorliegenden Erfindung. Sie ist mit einer Schelle 2 an einer Rohrleitung 4 montiert, die angebohrt werden soll. Die Anbohrarmatur verfügt über eine Stanzhülse 6, die längst verschieblich, in Figur 1 also von oben nach unten und umgekehrt, angeordnet ist. Zwischen dem oberen Teil der Schelle 2 und der Rohrleitung 4 sind Dichtringe 8 dargestellt, die den Zwischenraum so abdichten, dass das in der Rohrleitung 4 schließende Fluid nicht austreten kann. Die Anbohrarmatur weist zudem einen Dorn 10 auf, der ebenfalls längst verschieblich, also von oben nach unten, angeordnet ist. Der Dorn 10 weist eine Spitze 12 und einen Schaft 14 auf, der eine Stufe 16 aufweist. Man erkennt, dass sich an der Stufe 16 der Durchmesser des Schaftes 14 verändert. Auf der der Spitze 12 zugewandten Seite der Stufe 16 ist der Durchmesser größer als auf der der Spitze 12 abgewandten Seite der Stufe 16. Im oberen Bereich der Anbohrarmatur befindet sich Antriebe 18, mit denen der Dorn 10 und die Stanzhülse 6 bewegt werden können. Die Anbohrarmatur verfügt zudem über einen Abgangsstutzen 20, durch den nach dem Anbohren der Rohrleitung 4 das Fluid aus der Anbohrarmatur herausströmen kann. Figur 1 zeigt die Situation nach dem die Anbohrarmatur durch die Schelle 2 an der Rohrleitung 4 befestigt ist.

In Figur 2 ist sowohl der Dorn 10 als auch die Stanzhülse 6 nach unten, also auf die Rohrleitung 4 zu bewegt worden. Dabei wird zunächst der Dorn 10 verschoben, bis seine Spitze 12 die Wand der Rohrleitung 4 durchstoßen hat. Danach wird die Stanzhülse 6 bewegt, die mit ihrer Stanzkante 22, in Figur 1 und 2 also ihrem unteren Rand, einen Stopfen 24 aus der Wand der Rohrleitung 4 herausstanzt, durch den sich der Dorn 10 erstreckt. Wichtig ist dabei, dass sich die gesamte Spitze 12 des Dorns 10 innerhalb der Rohrleitung 4 befindet, sodass sich auch die bereiteste Stelle der Spitze innerhalb der Rohrleitung 4 befindet. Dies wirkt auf den Stopfen 24 wie ein Widerhaken.

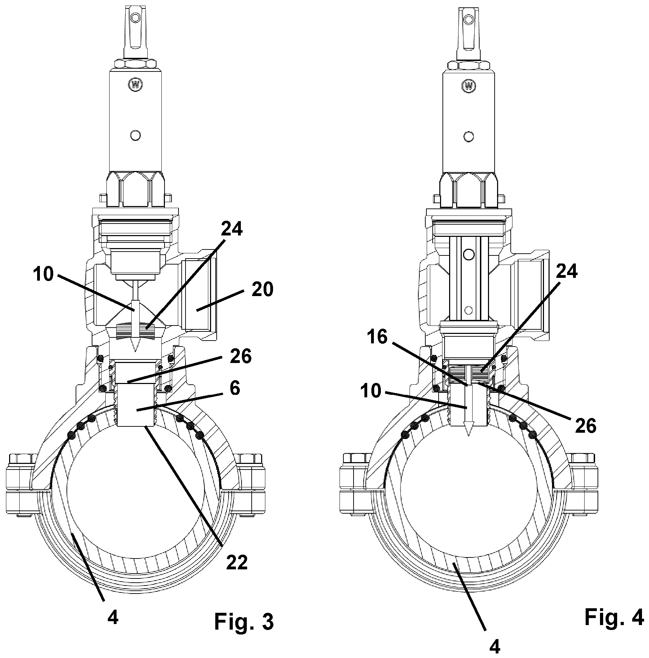

In Figur 3 ist die Situation nach dem nächsten Verfahrensschritte dargestellt. Der Dorn 10 ist mit dem Stopfen 24 von der Rohrleitung weg, in den Figuren also nach oben bewegt worden. Dadurch wird ein Strömungsweg aus der Rohrleitung 4 durch die Stanzhülse 6 und den Abgangsstutzen 20 möglich, sodass Fluid aus der Rohrleitung 4 austreten und in die Abzweigleitung, die am Abgangstutzen 20 befestigt, aber nicht gezeigt ist, eintreten kann. Man erkennt jedoch in Figur 3, dass der Stopfen 24 den freien Querschnitt des Strömungswegs stark einschränkt und somit zu einem großen Strömungswiderstand führt. Man erkennt in Figur 3 zudem besonders gut, dass die Stanzhülse 6 einen Vorsprung 26 aufweist, der in den Figuren als umlaufender Vorsprung ausgebildet ist. An dem Vorsprung 26 verändert sich ein Innendurchmesser der Stanzhülse 6. In dem ersten Bereich der Stanzhülse 6, der der Stanzkante 22 zugewandt ist, weist die Stanzhülse 6 einen kleineren Innendurchmesser auf, als in dem zweiten Bereich der Stanzhülse 6, der der Stanzkante 22 abgewandt ist.

In Figur 4 ist die Situation nach dem Verfahrensschritte e. dargestellt. Der Dorn 10 ist mit dem Stopfen 24 wieder auf die Rohrleitung 4 zu bewegt worden. Dabei ist der Stopfen 24 mit dem Vorsprung 26 in Kontakt gekommen. Der Stopfen 24 wird durch die Rückstellkräfte des Materials der Wand der Rohrleitung 4 aufgeweitet, sodass er nicht in den ersten Bereich der Stanzhülse 6 eindringen kann. Da der Dorn 10 dennoch weiter in Richtung auf die Rohrleitung 4 zu verschoben wird, schiebt er sich bis auch die Stufe 16 des Dorns 10 den Stopfen 24 durchdrungen hat.

Danach wird der Dorn 10 wieder von der Rohrleitung 4 weg verschoben, wodurch auch der Stopfen 24 verschoben wird. Er liegt an der Stufe 16 des Dorns 10 an und wird somit deutlich weiter von der Rohrleitung 4 weg, in den Figuren also nach oben verschoben, nach dem Verfahrensschritte d. der Fall ist, wie dies in Figur 3 zu erkennen ist. Der Stopfen 24 hat nun einen deutlich kleineren Einfluss auf das aus der Rohrleitung 4 durch die Stanzhülse 6 und den Abgangsstutzen 20 strömenden Medium, sodass ein deutlich geringerer Strömungswiderstand erreicht wird.

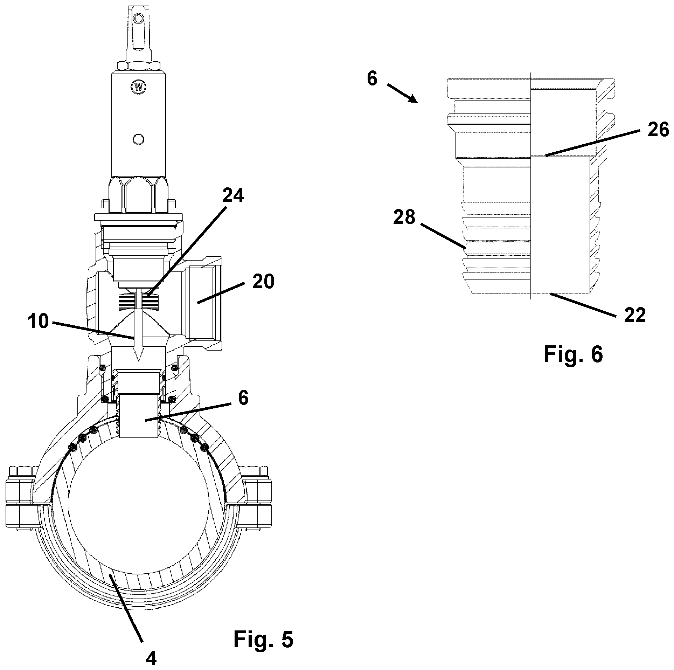

Figur 6 zeigt eine schematische Darstellung einer Stanzhülse 6. Man erkennt an ihrer Innenwand den Vorsprung 26, bei der sich der Innendurchmesser der Stanzhülse 6 verändert. Am unteren Ende der Stanzhülse 6 befindet sich die Stanzkante 22, die im gezeigten Ausführungsbeispiel kreisförmig ausgebildet ist. An der Außenseite der Stanzhülse 6 sind Vorsprünge 28 dargestellt, die zwar in die Rohrleitung 4 eindringen können, wenn die Stanzhülse 6 in Richtung der Rohrleitung 4 verschoben wird, die jedoch verhindern, dass die Stanzhülse 6 wieder aus der Rohrleitung 4 herausgezogen werden kann.

### Bezugszeichenliste:

2 Schelle
4 Rohrleitung
6 Stanzhülse
8 Dichtring
10 Dorn
12 Spitze
14 Schaft
16 Stufe
18 Antrieb
20 Abgangsstutzen
22 Stanzkante
24 Stopfen
26 Vorsprung
28 Vorsprung

## Patentansprüche

1. Verfahren zum Anschließen einer Anbohrarmatur an eine Rohrleitung (4), wobei die Anbohrarmatur eine verschieblich gelagerte Stanzhülse (6) und einen verschieblich gelagerten Dorn (10) aufweist, wobei das Verfahren folgend Schritte aufweist:
a. Positionieren der Anbohrarmatur an der Rohrleitung (4),
b. Verschieben des Dorns (10) in Richtung der Rohrleitung (4) bis der Dorn (10) die Rohrleitung (4) durchstößt,
c. Verschieben der Stanzhülse (6) in Richtung der Rohrleitung (4) bis die Stanzhülse (6) die Rohrleitung (4) durchstößt, so dass ein Stopfen (24) aus der Rohrleitung (4) herausgestanzt wird, wobei der Dorn (10) durch den Stopfen (24) verläuft,
d. Verschieben des Dorns (10) von der Rohrleitung (4) weg, so dass der Stopfen (24) mit dem Dorn (10) bewegt wird.

2. Verfahren nach Anspruch 1, **dadurch gekennzeichnet, dass** der Dorn (10) im Schritt d. so weit von der Rohrleitung (4) weg verschoben wird, dass der Stopfen (24) keinen Kontakt mehr zur Stanzhülse (6) hat.

3. Verfahren nach Anspruch 1 oder 2, **dadurch gekennzeichnet, dass** die Stanzhülse (6) an ihrer Innenfläche einen Vorsprung (26), vorzugsweise einen umlaufenden Vorsprung (26) aufweist und das Verfahren folgende zusätzlichen Schritte aufweist:
e. Verschieben des Dorns (10) und des Stopfens (24) in Richtung der Rohrleitung (4), so dass der Stopfen (24) an dem Vorsprung (26) anliegt und der Dorn (10) durch den Stopfen (24) hindurchgeschoben wird und
f. Verschieben des Dorns (10) und des Stopfens (24) von der Rohrleitung (4) weg.

4. Anbohrarmatur für ein Verfahren nach Anspruch 1 oder 2, wobei die Anbohrarmatur eine verschieblich gelagerte Stanzhülse (6) und einen verschieblich gelagerten Dorn (10) aufweist, wobei der Dorn (10) und die Stanzhülse (6) unabhängig voneinander verschieblich sind.

5. Anbohrarmatur nach Anspruch 3, **dadurch gekennzeichnet, dass** die Stanzhülse (6) und der Dorn (10) parallel zueinander verschieblich gelagert sind.

6. Anbohrarmatur nach Anspruch 3 oder 4, **dadurch gekennzeichnet, dass** der Dorn (10) und die Stanzhülse (6) entlang der Längsrichtung der Stanzhülse (6) verschieblich sind.

7. Anbohrarmatur, nach einem der Ansprüche 3 bis 5, **dadurch gekennzeichnet, dass** der Dorn (10) einen Schaft (14) und einen Kopf mit einer Spitze (12) aufweist, wobei der Kopf einen von der Spitze (12) aus zunehmenden Durchmesser aufweist, der an seiner größten Ausdehnung größer als der Durchmesser des Schaftes (14) ist.

8. Anbohrarmatur nach Anspruch 6, **dadurch gekennzeichnet, dass** der Schaft (14) des Dorns (10) eine Stufe (16) aufweist, wobei der Durchmesser des Schaftes (14) auf der der Spitze (12) des Dorns (10) zugewandten Seite der Stufe (16) größer ist als auf der der Spitze (12) abgewandten Seite der Stufe (16).

9. Anbohrarmatur nach einem der Ansprüche 3 bis 7, **dadurch gekennzeichnet, dass** die Stanzhülse (6) einen rotationsymmetrischen Querschnitt aufweist und sich der Dorn (10) entlang der Rotationsachse erstreckt.

10. Anbohrarmatur nach einem der Ansprüche 3 bis 8, **dadurch gekennzeichnet, dass** die Stanzhülse (6) an ihrer Innenfläche einen Vorsprung (26), vorzugsweise einen umlaufenden Vorsprung (26) aufweist, der vorzugsweise so ausgebildet ist, dass ein Innendurchmesser der Stanzhülse (6) auf der der Stanzkante (22) zugewandten Seite des Vorsprungs (26) kleiner als auf der der Stanzkante (22) abgewandten Seite des Vorsprungs (26) ist.
